# EUROPEAN PATENT SPECIFICATION

(11) **EP 1 931 807 B1**
(45) Date of publication and mention of the grant of the patent: **25.07.2012**
(21) Application number: 06794099.9
(22) Date of filing: 03.10.2006
(51) Int. Cl.: C22B 23/00, C22B 26/00, C22B 11/00

(54) **METHOD FOR PROCESSING NICKEL BEARING RAW MATERIAL IN CHLORIDE-BASED LEACHING**
VERFAHREN ZUR VERARBEITUNG VON NICKELHALTIGEM ROHMATERIAL BEI DER AUF CHLORID BASIERENDEN AUSLAUGUNG
PROCEDE POUR TRAITER UNE MATIERE PREMIERE PORTANT DU NICKEL DANS LE CADRE D'UNE LIXIVIATION A BASE DE CHLORURE

(30) Priority: 03.10.2005 AU 2005905436
(43) Date of publication of application: 18.06.2008
(73) Proprietor: Outotec Oyj, 02200 Espoo (FI)
(72) Inventor: HYVÄRINEN, Olli, FI-28220 Pori (FI); KARONEN, Janne, FI-32800 Kokemäki (FI); HAAVANLAMMI, Liisa, FI-02200 Espoo (FI); KREBS, Damien, Kensington, Western Australia 6151 (AU)
(74) Representative: Graf Glück Habersack Kritzenberger
(86) International application number: PCT/FI2006/000323
(87) International publication number: WO 2007/039665

(56) References cited:
- EP-B1- 1 303 641
- CN-A- 1 206 747
- JP-A- 10 140 257
- US-A- 3 791 812
- US-A- 3 880 653
- US-A- 3 975 189
- US-A- 4 060 464
- US-A1- 2003 066 389
- US-A1- 2005 118 081
- US-B1- 6 428 604

## Description

### FIELD OF THE INVENTION

The invention relates to a method for processing nickel containing raw material such as sulphidic nickel concentrate or nickel ore in chloride-based leaching for obtaining a nickel product. The leaching of the nickel raw material is carried out in atmospheric conditions. The reagents, such as chlorine, hydrogen and sodium hydroxide, needed for leaching nickel and for processing the products, are obtained from chlorine-alkali electrolysis that is integrated as a step in the process.

### BACKGROUND OF THE INVENTION

The world nickel resources are divided into two major categories, sulphide ore and oxidized ore (laterite ore). The conventional exploitation of nickel sulphide ore is essentially a pyrometallurgical process, where the mined ore is first finely ground, and then the nickel sulphide minerals are concentrated by froth flotation to produce a nickel concentrate. The concentrate is then treated further by smelting and reduction to produce a nickel bearing matte, which also contains copper, cobalt, and iron. The matte is then refined by known hydrometallurgical processes, which might include oxidative leaching or pressure leaching, followed by impurity removal and hydrogen reduction or electrowinning.

A drawback of the smelting process is the generation of sulphur dioxide, which has to be treated in an acid plant to produce sulphuric acid, a product that is not always easy to dispose of from the smelter location. Losses of nickel and cobalt into smelter slag are significant, and there can be problems in dealing with some of the minor elements in concentrates, such as magnesium and arsenic.

From mineralizations that are difficult to concentrate, metallurgic processes also obtain concentrates that are difficult to process as regards their quality. The pyrometallurgical treatment of the concentrate becomes remarkably more difficult, when the magnesium content in the concentrate is high, and respectively the iron content is low. Now the iron/magnesium ratio of the concentrate becomes low, and this brings forth difficulties, because if the MgO content of the slag created in the smelting process is for example over 11 %, the viscosity of the slag rises so high that it disturbs the removal of the slag from the furnace. As the viscosity rises, it results in that also part of the nickel matte drops remain in the slag. In arid areas, saline water must be used for wet concentration, in which case the concentrate contains halides that are hazardous in pyrometallurgical processes.

A large number of hydrometallurgic routes for processing nickel sulphide concentrates have been described in the literature; generally they include grinding or fine grinding of the concentrate, whereafter the sulphide is treated in oxidative pressure leaching for processing sulphuric acid for the leach process.

Biological processing of nickel sulphides has also been described. In that case bacterially assisted leaching is followed by solution purification, metal separation and nickel electrowinning. The long residence times of this type of processes result in immensely large reactors in the leaching step, and owing to the remarkable needs of capital, the process has not been a commercial success.

The Activox process that is described for example in the EP patent 1 303 641 comprises the grinding of nickel concentrate into a very fine ground material, whereafter it is subjected to oxidative leaching at a high pressure for separating nickel into the sulphate solution, and subsequently impurities are removed by known methods, and metallic nickel is recovered.

A drawback of the above described hydrometallurgical processes is that a large part of the sulphur contained in the sulphide is oxidized into sulphuric acid, which results in high expenses caused by neutralization reagents, and the creation of large waste quantities that must be removed, such as ammonium sulphate and gypsum. It can be estimated that the high expenses resulting from these two factors when combined make said processes commercially less attractive.

The WO patent application 96/41029, "Chloride assisted hydrometallurgical extraction of nickel and cobalt from sulphide ores", describes oxidative pressure leaching of nickel and cobalt sulphide ores in the presence of oxygen and likewise an acidic leaching containing halide, copper and sulphate ions. The obtained solution is subjected to solids separation and solution purification, precipitation of the mixed nickel and cobalt hydroxide, re-leaching of the precipitate in an ammoniacal solution, whereafter the metals are separated by solvent extraction and recovered by electrowinning. The process suffers similar limitations as the sulphate-based hydrometallurgical processes described above.

The US patent 3,880,653 describes the recovery of metallic nickel from a nickel matte containing copper and precious metals. The leaching of the nickel matte is realized as a concurrent process, where the nickel matte is first suspended to a chloride solution obtained from nickel electrowinning and containing monovalent copper. The chloride solution is conducted to a leaching step, where also chlorine created in electrolysis is fed. Chlorine oxidizes the monovalent copper, which in turn dissolves the nickel and is at the same time reduced back to monovalent form and precipitated as copper sulphide. The sulphur contained in the dissolving sulphides is precipitated as element sulphur. The precious metals remain undissolved in the leaching. After the first leaching step, the whole batch of slurry is conducted to a second step, where the dissolved divalent copper is precipitated by means of nickel matte. The solution and the solid material are separated, and the solution is conducted to nickel electrowinning.

The JP patent application 10-140257 describes the recovery of nickel by means of chlorine leaching and electrolysis from materials, such as nickel matte, containing nickel, cobalt, copper and sulphur. Nickel matte is leached in concurrent leaching into a chloride solution that contains monovalent copper, and chlorine is supplied into the solution for leaching nickel and other metals. When chlorine is supplied into the first steps of the leaching process, the sulphur contained in the nickel matte also is partly dissolved and forms sulphuric acid in the solution. In the final step of the leaching process, there is no more supplied chlorine but air, which means that in the final step, the leaching is carried out by means of the oxygen contained in the air and sulphuric acid. The nickel chloride bearing solution is conducted to electrolysis for recovering the metallic nickel, and the chlorine created in the electrolysis is used for leaching the raw material. Also the recycled solution obtained from electrolysis is used for leaching the raw material.

Among the methods described above, the latter two deal with nickel mattes that are produced by first processing the nickel concentrate pyrometallurgically. The large quantity of sulphur dioxide created in the process, which sulphur dioxide is generally processed further into sulphuric acid, can be regarded as a drawback in the pyrometallurgical treatment. The use and commercial marketing of sulphuric acid is difficult, particularly when the smelter location is far from the location where sulphuric acid should be used.

### OBJECT OF THE INVENTION

The object of the present invention is to alleviate at least some of the limitations of the prior art processes, and the method is based on an advantageous chloride-based process for treating nickel bearing raw materials such as nickel sulphide concentrate or ore or scrap, particularly poor nickel concentrates and ores. By the method according to the invention, also impurities, such as raw materials containing magnesium and halides, can be treated without disturbing the recovery of nickel. The reagents needed when processing nickel concentrate and ore are formed in chlorine-alkali electrolysis that is integrated as part of the method. The recycling of reagents within the process makes the method particularly advantageous.

### SUMMARY OF THE INVENTION

The invention relates to a method for producing a nickel product from nickel-bearing sulphide raw materials, such as nickel sulphide concentrate or ore or scrap. According to the method, the raw material is leached in atmospheric conditions to an aqueous solution of sodium chloride and copper (II) chloride. The reagents, such as chlorine, hydrogen and sodium hydroxide, needed for leaching nickel and for producing the products, are obtained from chlorine-alkali electrolysis that is integrated as a step in the process.

Advantageously the production method of a nickel product contains the following steps:
a) nickel bearing raw material is leached in two or more steps by a solution containing sodium chloride and copper (II) chloride as a countercurrent leach in atmospheric conditions, so that the first leaching step when observed in the proceeding direction of the concentrate is non-oxidative, and the next steps are oxidative with respect to forming a nickel enriched nickel chloride - sodium chloride pregnant leach solution (PLS) and leach residue,
b) the nickel-enriched pregnant leach solution is subjected to a precipitation of dissolved iron and sulphates, and the precipitate is fed into the final step of the leaching process,
c) nickel is precipitated from the pregnant leach solution, by means of sodium hydroxide NaOH, as nickel hydroxide Ni(OH)₂,
d) the sodium chloride solution, depleted in nickel, is conducted to magnesium precipitation, where magnesium is precipitated from the solution, by means of sodium hydroxide, as magnesium hydroxide Mg(OH)₂,
e) other divalent dissolved impurity residues are removed from the NaCl solution by means of ion exchange,
f) the NaCl solution is subjected to concentration,
g) the concentrated NaCl solution is conducted to chlorine-alkali electrolysis, where part of the solution is by electrolysis processed into chlorine, hydrogen and sodium hydroxide that are used as reagents in the method,
h) the NaCl solution that was depleted in the electrolysis is fed to the final leaching step of the concentrate and/or ore.

Advantageously the leaching of nickel sulphide bearing concentrate and/or ore is carried out in two steps.

In the first leaching step, raw material is leached in non-oxidative conditions by means of copper (II) chloride, so that part of the sulphides contained in the concentrate are dissolved, and copper is precipitated as copper sulphide. In the non-oxidative leaching step of raw material, the pH is within the range 0.5 - 3.0.

In the oxidative leaching steps of raw material, the raw material is advantageously leached by means of copper (II) chloride for dissolving sulphides, and in the first leaching step the precipitated copper sulphide is made to be dissolved into copper (II) chloride. In the oxidative leaching steps, the pH is adjusted within the range 1.7 - 2.8, preferably within the range 2.0 - 2.5.

According to a preferred embodiment of the method, the oxidative reagent employed in the oxidative leaching steps of concentrate and/or ore is oxygen-bearing gas, which is oxygen, oxygen-enriched air or air, and hydrochloric acid is fed into the leaching process.

According to another preferred embodiment of the method, the oxidative reagent employed in the oxidative leaching steps of concentrate and/or ore is chlorine formed in chlorine-alkali electrolysis.

According to a preferred embodiment of the method, into a nickel-enriched pregnant leach solution, there is fed a calcium compound and sodium hydroxide for removing the dissolved sulphates and iron. The created iron/gypsum precipitate is conducted to the final leaching step.

According to a preferred embodiment of the method, as the end product there is precipitated nickel hydroxide that contains the cobalt of the concentrate. The nickel hydroxide precipitation is carried out by means of sodium hydroxide obtained from the chlorine-alkali electrolysis. The nickel hydroxide precipitation is carried out at the pH value 6-7.

According to another preferred embodiment of the method, a nickel-enriched pregnant leach solution is subjected to cobalt removal, advantageously by solvent extraction, and nickel is precipitated from the cobalt-free pregnant leach solution, by means of sodium hydroxide, as nickel hydroxide, from which metallic nickel is recovered by reduction. Advantageously the reduction of metallic nickel is carried out as hydrogen reduction, in which case the required hydrogen is preferably formed in chlorine-alkali electrolysis.

According to a preferred embodiment of the method, the nickel depleted NaCl solution that has become poor in nickel is subjected to polish filtering for removing the solids prior to conducting the solution to Mg precipitation.

Magnesium precipitation is advantageously carried out at the pH value 9-10.

The hydrochloric acid that is used as the leach reagent of raw material is advantageously made of the hydrogen and chlorine created in the chlorine-alkali electrolysis.

A nickel bearing raw material may contain gold and/or other precious metals (PGM). In that case the gold is dissolved in the final leaching step and recovered from the solution of the final leaching step; the gold-free solution is conducted to the preceding leach step, when observed in the proceeding direction of the concentrate. Other precious metals are recovered from the leach residue.

According to a preferred embodiment of the method, part of the depleted solution created in the concentration of sodium chloride is conducted to a concentrate leaching process.

### LIST OF DRAWINGS

Figure 1 represents a schematical drawing of an embodiment of the method according to the invention, and
figure 2 is represents a schematical drawing of another embodiment of the method according to the invention.

### DETAILED DESCRIPTION OF THE INVENTION

The invention relates to a method for producing a nickel product from nickel sulphide bearing raw material by leaching it into an aqueous solution of sodium chloride - copper (II) chloride as countercurrent leaching in several steps, in conditions where the final leaching step with respect to the solids flow is oxidative, and the first step is advantageously non-oxidative.

In this context, the concept of nickel sulphide bearing raw material means mainly nickel sulphide concentrate or ore but it can also be scrap type or matte. For the sake of simplicity, the text only mentions concentrate. Generally nickel sulphide bearing raw material always contains a certain amount of copper, iron, cobalt and magnesium. Each leaching step typically consists of a series of several reactors, where the suspension of solution and solids is transferred as overflow from one reactor to the next. The reactors are provided with agitators. In between the process steps, there is performed thickening, so that the solution and the solids are transferred to different steps in the countercurrent leaching. The description of the invention describes a two-step leaching process, but it may turn out to be necessary to apply several steps. The notion of atmospheric conditions means that the operations are carried out at the pressure of the environment and at a temperature, which is within the range of 90° C - the boiling point of the solution - i.e. roughly 110° C. The alkaline chloride can be sodium or potassium chloride, but for the sake of simplicity, the text only mentions sodium chloride.

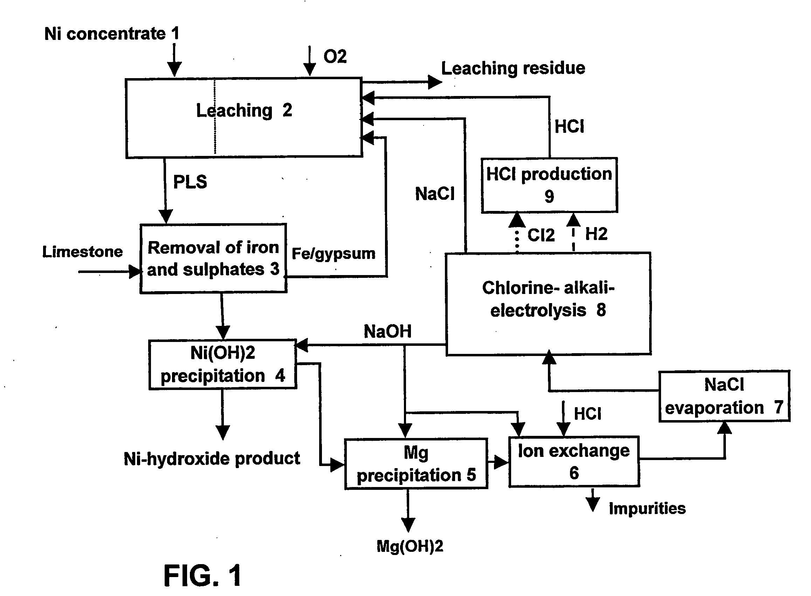

A method according to the invention is described below, with reference to the flowchart shown in figure 1. The leaching of nickel sulphide bearing raw material 1 is carried out as countercurrent leaching 2 in two or more steps. In the arrangement according to the drawing, the leaching steps are separated by a dotted line. Concentrate is fed into the first leaching step, and the chloride solutions and oxidative reagents used in the leaching process are fed into the second step. In the first leaching step, the conditions are adjusted to be such that part of the nickel and iron contained in the concentrate are dissolved, owing to the influence of divalent copper, and the monovalent copper created in the leaching process is precipitated as copper sulphide. Neither oxygen nor other oxidant is fed into the first leaching step for dissolving copper, but the conditions in the first leaching step are non-oxidative. The leaching takes place in the pH range 0.5 - 3.0, depending on the concentrate. The principal reaction that takes place in this step can be illustrated by the leaching reaction of pentlandite:

2(Ni,Fe)₉S₈ + 18 CuCl₂ → 9NiCl₂ + 9FeCl₂ + 9Cu₂S↓ + 7 S⁰ (1)

The reaction (1) can be described as an exchange reaction where divalent copper is reduced to monovalent and at the same time dissolves the iron and nickel contained in the concentrate. Other nickel and iron minerals, such as violarite, millerite and pyrrhotite, are also dissolved according to the same principle, and respectively copper sulphide and element sulphur are precipitated. The magnesium contained in the nickel raw material is dissolved, thus forming magnesium chloride.

The copper contained in the concentrate does not dissolve in the first leaching step conditions, but only in the second step, or if there are several leaching steps, only in the last step. If the copper content of the raw material is not sufficient for efficient leaching, more copper is brought to the leaching process in some suitable way, for instance in the form of copper concentrate or copper sulphate. Advantageously the copper content in the solution is of the order 5-50 g/l. By adjusting the conditions to be suitable in the way described above, nearly all of the copper is precipitated in the first step as sulphide and is conducted, along with the precipitate, to the next leaching step. It is an advantage of the method that there is not needed a separate precipitation step for separating copper from the nickel-enriched solution, but precipitation is carried out in connection with the leaching of nickel. If the quantity of the copper contained in the concentrate is more than what is needed in the leaching process, part of the copper can be removed in a way suitable for the purpose.

After the first leaching step, there is carried out the separation of the solution and the solids, which is generally realized by thickening (not in the figure). The underflow, i.e. solids, of the thickener is conducted to the next leaching step, and the overflow of the thickener, i.e. the nickel-enriched pregnant leach solution (PLS) is conducted to solution purification for forming the nickel product.

The precipitate from the first leaching step is treated in the next leaching step, where the leaching of the concentrate precipitate is carried out in oxidative conditions. The employed oxidative reagent is oxygen-bearing gas that is fed in the leaching step. The oxygen-bearing gas is either oxygen, air or oxygen-enriched air. Air is the cheapest oxidative reagent, but its high nitrogen content results in an increase in the reactor contents, and may cause difficulties in the agitation of the reactors. When oxidation is carried out by means of oxygen-bearing gas, hydrochloric acid is also fed to the leaching step for adjusting the leach conditions. Owing to the oxidative reagent, the copper sulphide contained in the concentrate, as well as the copper sulphide created in the first leaching step, are dissolved into divalent copper (II) chloride, which in turn results in the dissolution of other concentrate sulphides, such as nickel and iron sulphides. The oxidative leaching is carried out within the pH range 1.7 - 2.8, preferably within the range 2.0 - 2.5. Iron that is dissolved as divalent is in the leach conditions oxidized to trivalent and precipitated from the solution. The leaching of nickel is again illustrated by means of the leaching reaction of pentlandite:

2(Ni,Fe)₉S₈ + 36 CuCl₂ → 9 NiCl₂ + 9 FeCl₂ + 36 CuCl + 16 S⁰ (2)

The cuprous chloride created in connection with the leaching of nickel is in the leach conditions oxidized back to divalent:

4 CuCl + O₂ + 4 HCl → 4 CuCl₂ + 2 H₂O (3)

The hydrochloric acid used as a reagent in connection with the oxidation of cuprous chloride is advantageously formed of chlorine and hydrogen created in the chlorine-alkali electrolysis 8.

In principle, the oxidation and precipitation of iron take place as follows:

FeCl₂ + 2 CuCl₂ → FeCl₃ + CuCl (4)

FeCl₃ + 2 H₂O → FeOOH↓ + 3 HCl (5)

According to reaction (5), iron is precipitated as goethite, but it has been found out that when the temperature is high and the resident time long, the main part of the iron is precipitated as hematite (Fe₂O₃). As can bee seen in reactions (1) and (2), the sulphur contained in sulphides is during the leaching process precipitated as element sulphur.

At the end of the final leaching step, there is carried out the separation of the solution and the solids. The solution is conducted from the second step to the leaching of the first step. If gold is contained in the concentrate, it is dissolved in the solution obtained from the second step, as well as part of the other precious metals. The dissolved precious metals are recovered from the second step solution by known methods prior to feeding the solution to the first step leaching. The leach residue from the second leaching step mainly includes iron precipitate and element sulphur. In case the raw material contains, apart from gold, also other precious metals such as platinum and palladium (PGM= Precious Group Metal) that are poorly soluble in leach conditions, they remain partly in the leach residue. In case the PGM quantity in the precipitate is remarkable, the PGM recovery is carried out from the leach residue as a separate process step by some suitable method.

The nickel-enriched NiCl₂-NaCl solution, PLS, obtained from the first leaching step, contains a small amount of dissolved iron and sulphates. The removal of iron and sulphates is carried out as a separate purification step 3. Sulphates are advantageously precipitated by means of a calcium compound, such as limestone, or other calcium compound, so that when calculated as sulphur, their content left in the solution is at the most 2 g/l. In order to oxidize iron into trivalent form, it is advantageous to feed lye (NaOH) in the solution, in which case iron is precipitated from the solution. The precipitate is fed back to the final step of the concentrate leaching process, from where iron precipitate and gypsum are removed along with the leach residue.

In case the copper content of the nickel concentrate is higher than what is needed in the leaching process, the nickel-enriched NaCl solution still contains divalent copper. The copper can be removed in a separate copper recovery step, which is advantageously either sulphide precipitation or solvent extraction (not in the figure).

Nickel recovery from the nickel-enriched solution can be performed, although the solution contains a certain amount of impurities, such as magnesium. According to Figure 1, the solution is conducted to the nickel hydroxide precipitation step 4, where the employed precipitation reagent is advantageously sodium hydroxide i.e. lye obtained from the chlorine-alkali electrolysis 8. The precipitation of nickel hydroxide is carried out within the pH range 6-7.

Generally nickel concentrates also contain a certain amount of cobalt that is coprecipitated along with nickel. However, cobalt-bearing nickel hydroxide is a commercial end product from the nickel process, and its purification is carried out in a separate recovery unit.

The sodium chloride solution obtained from nickel hydroxide precipitation contains a small amount of impurities. The impurities that are found in solid form in the solution are advantageously removed by filtering in a so-called polish filtering process (not in the figure). Soluble impurities are metals, such as magnesium, lime, nickel and zinc in their divalent forms. These are removed before conducting the solution to chlorine-alkali electrolysis.

Among soluble impurities, the quantity of magnesium is generally largest, and the dimensioning of the final solution purification such as ion exchange according to the Mg quantity becomes fairly expensive. An advantageous method according to the invention is to remove the magnesium from the solution in the Mg precipitation step 5 by using sodium hydroxide NaOH, formed in the chlorine-alkali electrolysis 8, as the precipitation reagent. The solution pH is raised to within the range 9-10, in which case Mg is precipitated as magnesium hydroxide Mg(OH)₂. The hydroxide precipitate is subjected to thickening, and the underflow of the thickening is recycled to the precipitation step advantageously for improving the quality of the precipitate. When the hydrometallurgical treatment is completed with a separate magnesium recovery, it is possible thereby to treat concentrates where the magnesium quantity is hazardously high for treating the concentrate pyrometallurgically.

When the quantity of other impurities, such as zinc and nickel left in the solution, is of the order milligrams per liter, the most advantageous method for removing them is ion exchange 6. Ion exchange is preferably carried out by means of a chelating ion exchange resin. Ion exchange functions according to known technique, so that the impurities bound in the resin are removed by means of hydrochloric acid, and the resin is regenerated with an NaOH solution. Consequently, the reagents needed in ion exchange are advantageously obtained from the chlorine-alkali electrolysis that forms part of the process.

The content of the NaCl solution, obtained from nickel precipitation and purified, is of the order 150-240 g/L NaCl, preferably 200 g/L. However, for the chlorine-alkali electrolysis it is necessary to raise the NaCl content in the solution up to the order of 160-300 g/L, preferably 280-300 g/L. The content increase is carried out in some suitable way, for example by means of a vacuum evaporator or immersion evaporator in the evaporation step 7. When necessary, the depleted NaCl solution created in the evaporation step can be conducted to the concentrate leaching process (not in the figure).

The purified and concentrated sodium chloride solution is conducted to chlorine-alkali electrolysis 8 for producing the chlorine, hydrogen and sodium hydroxide needed in different steps of the nickel product process. The chlorine-alkali electrolysis functions in a known fashion. The NaCl saline solution is in the electrolysis conducted to the anode side, where the electric current disintegrates it, thus forming chlorine gas. Sodium ions proceed through a membrane placed in between the anode and cathode sides to the cathode side, where the electric current disintegrates water to hydrogen gas, thus forming sodium hydroxide. The NaCl solution conducted to electrolysis is depleted in the electrolysis in the proportion of the gases and lye produced therefrom. The NaCl content of the solution removed from electrolysis is of the order 150 - 240 g/L, preferably 200 g/L, and it is recycled back to the raw material leaching process.

As was maintained above, the sodium hydroxide formed in the chlorine-alkali electrolysis is used at least in the precipitation of nickel hydroxide and magnesium hydroxide. Sodium hydroxide is also needed in the ion exchange regeneration, and when necessary, it can also be used in the removal of sulphates.

An advantageous method for leaching nickel bearing raw material is to feed oxygen to the final leaching step and to adjust the leach conditions by feeding hydrochloric acid therein according to reaction 3. The required hydrochloric acid is advantageously made of the hydrogen and chlorine created in the electrolysis in the step 9 of the hydrochloric acid production process.

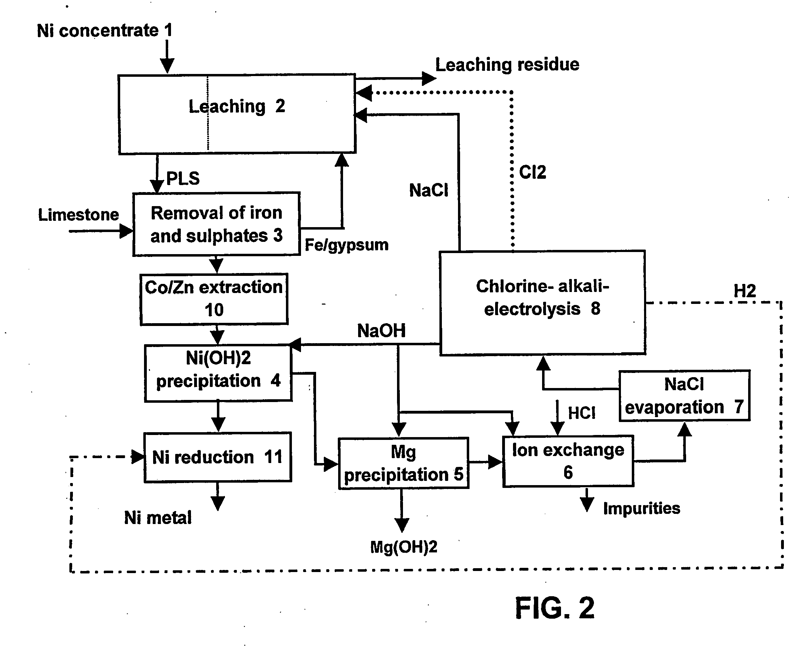

The process according to Figure 2 is similar to that illustrated in Figure 1, but now the end product of nickel is metallic nickel. In principle, the leaching of nickel sulphide bearing concentrate is carried out in the same way as was explained above, in connection with the description of Figure 1. Instead of oxidizing the monovalent copper in the final leaching step into divalent form by means of oxygen and hydrochloric acid, the copper oxidation according to Figure 2 is carried out directly by chlorine gas according to the following reaction:

2 CuCl + Cl₂ → CuCl₂ (6)

The chlorine used as the oxidant in the leaching process is advantageously obtained from the chlorine-alkali electrolysis 8 that constitutes a step in the method.

When the end product of the process is metallic nickel, the solution conducted to nickel hydroxide precipitation must be free of other metals that are precipitated in the same or more acidic conditions than nickel. Such metals are for example cobalt and zinc, the removal of which is advantageously carried out by means of an extraction step 10. Depending on the number of the metals to be removed, the step 10 may include an extraction process carried out by one or several extraction agents. After the solution purification steps 3 and 10, the precipitation of nickel hydroxide by means of lye NaOH is carried out from a pure nickel chloride solution. The created nickel hydroxide (Ni(OH)₂ is very pure, and it can be conducted to reduction 11, the product of which is metallic nickel. Nickel reduction is advantageously performed with hydrogen, obtained from the chlorine-alkali electrolysis, serving at least partly as the reduction reagent. When the alternative according to Figure 2 does not include creation of hydrochloric acid, the hydrogen formed in the electrolysis can be used for reducing nickel. The ensuing reactions are the following:

NiCl₂ + 2 NaOH → Ni(OH)₂ + 2 NaCl (7)

Ni(OH)₂ + H₂ → Ni + 2 H₂O (8)

In the specification above, we have described a method where hydrogen and chlorine created in alkaline-chloride electrolysis are used for producing hydrochloric acid that is conducted to a leaching process, and at the same time the nickel product is a cobalt bearing nickel hydroxide, and on the other hand we also have described a method where chlorine is fed in the leaching process, and the nickel product is metallic nickel, but it is, however, pointed out that the invention is not restricted to these applications exclusively. The scope of the invention also encompasses arrangements where chlorine is fed in the leaching process and the end product is nickel hydroxide, as well as arrangements where hydrochloric acid is fed in the leaching process and metallic nickel is produced.

### EXAMPLES

### Example 1

Sulphidic nickel concentrate was leached according to the method of the invention. The major part of the nickel contained in the concentrate was bound in pentlandite. Other main minerals were serpentinite, millerite and pyrite. The chemical analysis of the concentrate was:

| **Ni** | **Fe** | **S** | **Co** | **Cu** | **Mg** |
|---|---|---|---|---|---|
| **%** | **%** | **%** | **%** | **%** | **%** |
| 22.9 | 19.1 | 19.40 | 0.61 | 0.02 | 8.3 |

### Leaching step 1

Nickel concentrate (1000g) was leached in a solution (3170 ml), the initial content of which was:

| **Ni** | **Fe** | **S** | **Ca** | **Co** | **Cu** | **Mg** | **Na** | **Zn** |
|---|---|---|---|---|---|---|---|---|
| **g/L** | **mg/L** | **mg/L** | **mg/L** | **mg/L** | **g/L** | **mg/L** | **g/L** | **mg/L** |
| 55.5 | 4.8 | 7850 | 412 | 1440 | 13.7 | 3550 | 64.4 | 157 |

Oxidant was not used in the leaching, and the pH value of the solution was 2-3 during the leaching process. Copper was precipitated from the solution as chalcochite Cu₂S, and at the same time nickel was dissolved. After leaching three hours at the temperature of 95° C, there was obtained a solution (leach product solution, PLS), the composition of which was:

| **Ni** | **Fe** | **S** | **Ca** | **Co** | **Cu** | **Mg** | **Na** | **Zn** |
|---|---|---|---|---|---|---|---|---|
| **g/L** | **mg/L** | **mg/L** | **mg/L** | **mg/L** | **g/L** | **mg/L** | **g/L** | **mg/L** |
| 65.3 | 4080 | 9200 | 534 | 1600 | 0.0234 | 5500 | 70.3 | 217 |

After three hours, the composition of solids was:

| **Ni** | **Fe** | **S** | **Co** | **Cu** | **Mg** |
|---|---|---|---|---|---|
| **%** | **%** | **%** | **%** | **%** | **%** |
| 21.3 | 19.1 | 19.8 | 0.59 | 4.7 | 7.4 |

### Leaching step 2

Solids, i.e. the leach residue from the first leaching step, completed by the solids from iron removal, was leached oxidatively in a solution, the initial composition of which was:

| **Ni** | **Fe** | **S** | **Ca** | **Co** | **Cu** | **Mg** | **Na** | **Zn** |
|---|---|---|---|---|---|---|---|---|
| **q/L** | **mg/L** | **mg/L** | **mg/L** | **mg/L** | **g/L** | **mg/L** | **g/L** | **mg/L** |
| 18.1 | 1340 | 3240 | 1360 | 418 | 0.0051 | 1930 | 76.6 | 67.8 |

Oxygen and hydrochloric acid were fed in the leaching process for oxidizing the sulphides. The pH value was maintained within the range 2.0 - 2.5. The consumption of hydrochloric acid was 250 g. The duration of the leaching process was 20 hours, whereafter the compositions of the solution and the solids were:

### Solution

| **Ni** | **Fe** | **S** | **Ca** | **Co** | **Cu** | **Mg** | **Na** | **Zn** |
|---|---|---|---|---|---|---|---|---|
| **g/L** | **mg/L** | **mg/L** | **mg/L** | **mg/L** | **g/L** | **mg/L** | **g/L** | **mg/L** |
| 62.1 | 12.8 | 8810 | 361 | 1680 | 15.5 | 3990 | 72.2 | 182 |

### Solids

| **Ni** | **Fe** | **S** | **Co** | **Cu** | **Mg** |
|---|---|---|---|---|---|
| **%** | **%** | **%** | **%** | **%** | **%** |
| 1.3 | 28.0 | 17.6 | 0.03 | 0.14 | 7.66 |

The total yields to the solution, calculated from the iron balance, were (leaching step 1 + leaching step 2):

| | | |
|---|---|---|
| **●** | Nickel | 95.8% |
| **●** | Cobalt | 96.4% |

### Iron and sulphate removal

The solution obtained from the first leaching step was treated with calcium chloride and lye for precipitating iron and for lowering the sulphate content. The test was carried out at the temperature of 80° C, and the duration of the precipitation was one hour. The created precipitate was fed into the second leaching step. The consumption of calcium chloride was 81 g and that of lye was 65 g. The pH of the product solution was 4, and the analysis was:

| **Ni** | **Fe** | **S** | **Ca** | **Co** | **Cu** | **Mg** | **Na** | **Zn** |
|---|---|---|---|---|---|---|---|---|
| **g/L** | **mg/L** | **mg/L** | **mg/L** | **mg/L** | **g/L** | **mg/L** | **g/L** | **mg/L** |
| 46.7 | 11 | 2400 | 2100 | 1380 | 0.035 | 5230 | 72 | 187 |

### Nickel precipitation

The solution obtained from iron and sulphate precipitation was further treated by lye, and the pH was raised to the value 6.8, so that nickel was precipitated as nickel hydroxide, which is a commercial product. The chemical analysis of the obtained solution and precipitate is given below:

### Solution

| **Ni** | **Fe** | **S** | **Ca** | **Co** | **Cu** | **Mg** | **Na** | **Zn** |
|---|---|---|---|---|---|---|---|---|
| **g/L** | **mg/L** | **mg/L** | **mg/L** | **mg/L** | **g/L** | **mg/L** | **g/L** | **mg/L** |
| 0.066 | 0.73 | 1800 | 1680 | 0.1 | 0.0107 | 3600 | 78.9 | 0.2 |

### Precipitate

| **Ni** | **Fe** | **S** | **Co** | **Cu** | **Mg** |
|---|---|---|---|---|---|
| **%** | **%** | **%** | **%** | **%** | **%** |
| 55.2 | 0.02 | 0.09 | 0.73 | 0.03 | 0.37 |

### Magnesium removal

Magnesium was precipitated by lye from the product solution, obtained from nickel precipitation and nickel depleted, by raising the solution pH value to roughly 9, so that Mg was precipitated as magnesium hydroxide which also is a commercial product. The analyses of the solution and solids were as follows:

### Product solution

| **Ni** | **Fe** | **S** | **Ca** | **Co** | **Cu** | **Mg** | **Na** | **Zn** |
|---|---|---|---|---|---|---|---|---|
| **g/L** | **mg/L** | **mg/L** | **mg/L** | **mg/L** | **g/L** | **mg/L** | **g/L** | **mg/L** |
| 0.001 | 0.63 | 1900 | 1655 | 0 | 0.0012 | 48 | 83.3 | 0.2 |

### Precipitate

| **Ni** | **Fe** | **S** | **Co** | **Cu** | **Mg** |
|---|---|---|---|---|---|
| **%** | **%** | **%** | **%** | **%** | **%** |
| 1.5 | <0.01 | 0.26 | <0.01 | 0.1 | 37.7 |

The solution obtained from magnesium precipitation was treated by a commercially available ion exchange resin for purifying it, in order to render it suitable as feed to the chlorine-alkali electrolysis. Thereafter the solution was subjected to evaporation in a vacuum evaporator, whereafter the NaCl content of the solution was of the order 300 g/L. The solution was conducted to chlorine-alkali electrolysis, where part of the sodium chloride was processed into lye, chlorine and hydrogen. The lye was used for iron oxidation and nickel hydroxide precipitation. The chlorine and hydrogen were used for making hydrochloric acid that was conducted to the second leaching step, together with the depleted NaCl solution, the NaCl content of which at this stage was 200 g/L.

### Example 2

Nickel sulphide concentrate according to Example 1 was leached into a chloride solution that was similar as in Example 1. The first leaching step was carried out in similar fashion as in Example 1, but in the second leaching step, the oxidation of sulphides and monovalent copper chloride was carried out directly by means of chlorine gas.

This was tested by oxidizing the leach residue from the first step and the feed solution of the second step. The product solution and the precipitate analyses are given below:

### Solution

| **Ni** | **Fe** | **S** | **Ca** | **Co** | **Cu** | **Mg** | **Na** | **Zn** |
|---|---|---|---|---|---|---|---|---|
| **g/L** | **mg/L** | **mg/L** | **mg/L** | **mg/L** | **g/L** | **mg/L** | **g/L** | **mg/L** |
| 63.1 | 15.2 | 9100 | 451 | 1650 | 16.1 | 4050 | 71.2 | 175 |

### Solids (leach residue)

| **Ni** | **Fe** | **S** | **Co** | **Cu** | **Mg** |
|---|---|---|---|---|---|
| **%** | **%** | **%** | **%** | **%** | **%** |
| 1.2 | 27.5 | 16.9 | 0.03 | 0.10 | 7.25 |

The solution from the second leaching step was conducted to the first leaching step, whereafter the further treatment of the solution was carried out in similar fashion as in Example 1.

## Claims

1. A method for producing a nickel product from nickel bearing raw material such as nickel sulphide concentrate or ore or scrap hydrometallurgically in chloride-based leaching, the production method cotaining the following steps:
a) raw material is leached in two or more steps by a solution containing sodium chloride and copper (II) chloride as a countercurrent leach in atmospheric conditions, so that the first leaching step when observed in the proceeding direction of the raw material is non-oxidative, and next steps are oxidative with respect to forming a nickel enriched nickel chloride pregnant leach solution (PLS) and leach residue,
b) the nickel-enriched pregnant leach solution is subjected to a precipitation of dissolved iron and sulphates, and the precipitate is fed into the final step of the leaching process,
c) nickel is precipitated from the pregnant leach solution, by means of sodium hydroxide NaOH, as nickel hydroxide Ni(OH)₂,
d) the nickel depleted sodium chloride solution is conducted to magnesium precipitation, where magnesium is precipitated from the solution, by means of sodium hydroxide, as magnesium hydroxide Mg(OH)₂,
e) other divalent dissolved impurity residues are removed from the NaCl-solution by means of ion exchange,
f) the NaCl solution is subjected to concentration,
g) the purified and concentrated NaCl solution is conducted to chlorine-alkali electrolysis, where part of the solution is by electrolysis processed into chlorine, hydrogen and sodium hydroxide that are used as reagents in the method,
h) the NaCl solution that was depleted in the electrolysis is fed to the final leaching step of the concentrate and/or ore.

2. A method according to claim 1, **characterized in that** the leaching of nickel containing raw material takes place in two steps.

3. A method according to claim 1 or 2, **characterized in that** in the first leaching step, raw material is leached in non-oxidative conditions by means of copper (II) chloride, so that part of the sulphides of the raw material is dissolved, and copper is precipitated as copper sulphide.

4. A method according to any one of the claims 1 - 3, **characterized in that** the pH value in the non-oxidative leaching step is within the range 0.5 - 3.0.

5. A method according to claim 1 or 2, **characterized in that** in the oxidative leaching steps of raw material, the raw material is leached by means of copper (II) chloride for dissolving sulphides, and that the copper sulphide precipitated in the first leaching step is made to be dissolved into copper (II) chloride.

6. A method according to any one of the claims 1, 2 or 5, **characterized in that** the oxidative reagent used in the oxidative leaching steps of the raw material is an oxygen-bearing gas that is oxygen, oxygen-enriched air or air, and that hydrochloric acid is conducted to the leaching process.

7. A method according to any one of the claims 1, 2 or 5, **characterized in that** in the oxidative leaching steps of the raw material, the employed oxidative reagent is chlorine formed in chlorine-alkali electrolysis.

8. A method according to any one of the claims 1, 2 or 5 - 7, **characterized in that** in the oxidative leaching steps of the raw material, the pH value is adjusted within the range 1.7 - 2.8, preferably within the range 2.0 - 2.5.

9. A method according to any one of the claims 1 - 8, **characterized in that** the iron contained in the leach residue is mainly hematite.

10. A method according to any one of the claims 1 - 9, **characterized in that** for removing dissolved sulphates and iron, a calcium compound and sodium hydroxide is fed to the nickel-enriched pregnant leach solution, and the created iron/gypsum precipitate is conducted to the final leaching step.

11. A method according to any one of the claims 1 - 10, **characterized in that** nickel hydroxide is precipitated as an end product containing the cobalt.

12. A method according to any one of the claims 1 - 10, **characterized in that** the nickel-enriched pregnant leach solution is subjected to cobalt removal by extraction.

13. A method according to claim 12, **characterized in that** nickel is precipitated from the cobalt-free pregnant leach solution, by means of sodium hydroxide, as nickel hydroxide, from which metallic nickel is recovered by reduction.

14. A method according to claim 1, **characterized in that** the reduction of metallic nickel is carried out by means of hydrogen that is at least partly formed in chlorine-alkali electrolysis.

15. A method according to any one of the claims 1 - 14, **characterized in that** the nickel depleted NaCl solution is subjected to polish filtering for removing solid substances prior to conducting the solution to Mg-precipitation.

16. A method according to claim 1, **characterized in that** the magnesium precipitation is preferably carried out at the pH value 9-10.

17. A method according to claim 6, **characterized in that** the hydrochloric acid used as a leaching reagent is made of hydrogen and chlorine formed in the chlorine-alkali electrolysis.

18. A method according to claim 1, **characterized in that** the nickel bearing raw material contains gold and/or other precious metals (PGM).

19. A method according to claim 18, **characterized in that** the gold is dissolved in the final leaching step and recovered from the solution of the final leaching step; the gold-free solution is conducted to the preceding leaching step, when observed in the proceeding direction of the concentrate.

20. A method according to claim 19, **characterized in that** in the leach conditions, poorly soluble precious metals (PGM) are recovered from the leach residue.

21. A method according to claim 1, **characterized in that** the depleted solution created in the concentration of sodium chloride is at least partly conducted to the raw material leaching process.

## Patentansprüche

1. Verfahren zur Herstellung eines Nickelprodukts aus einem Nickel beinhaltenden Rohmaterial, wie beispielsweise Nickelsulfid-Konzentrat oder Erz oder Schrott, durch hydrometallurgisches Laugen auf Chloridbasis, wobei das Herstellungsverfahren folgende Schritte aufweist:
a) das Rohmaterial wird in zwei oder mehreren Schritten durch eine Natrium-Chlorid und Kupfer-(II)-Chlorid enthaltende Lösung in Gegenstromverfahren unter atmosphärischen Bedingungen gelaugt, so dass der erste Auslaugschritt aus der Verfahrensrichtung gesehen das Rohmaterial nicht-oxidativ ist, und die darauf folgenden Schritte bezüglich einer Bildung einer mit Nickel angereicherten, Nickelchlorid-Frischlauge (PLS) und einem Extraktionsresiduum oxidativ sind,
b) die mit Nickel angereicherte Frischlauge wird einer Präzipitation von gelöstem Eisen und Sulfaten unterzogen, und das Präzipitat wird in einen finalen Schritt des Laugungsprozesses geführt,
c) Nickel wird aus der Frischlauge mit Hilfe von Natriumhydroxid NaOH als Nickelhydroxid Ni(OH)₂ präzipitiert,
d) die von Nickel abgereicherte Natriumchloridlösung wird einer Magnesium Präzipitation zugeführt, bei der Magnesium aus der Lösung mit Hilfe von Natriumhydroxid als Magnesiumhydroxid Mg(OH)₂ präzipitiert wird,
e) andere zweiwertige gelöste Verunreinigungsreste aus der NaCl-Lösung werden mit Hilfe eines Ionenaustausches entfernt,
f) die NaCl-Lösung wird einer Konzentration unterzogen,
g) die gereinigte und konzentrierte NaCl-Lösung wird einer Chlor-Alkali-Elektrolyse zugeführt, bei der ein Teil der Lösung durch Elektrolyse in Chlor, Wasserstoff und Natriumhydroxid verarbeitet wird, die als Reagenzien in dem Verfahren verwendet werden,
h) die in der Elektrolyse abgereicherte NaCl-Lösung wird dem finalen Auslaugschritt des Konzentrates und/oder Erzes zugeführt.

2. Verfahren nach Anspruch 1, **dadurch gekennzeichnet, dass** die Laugung des Nickel enthaltenden Rohmaterials in zwei Schritten abläuft.

3. Verfahren nach Anspruch 1 oder 2, **dadurch gekennzeichnet, dass** in dem ersten Auslaugschritt das Rohmaterial zu nicht-oxidativen Bedingungen mit Hilfe von Kupfer-(II)-Chloride gelaugt wird, sodass ein Teil der Sulfide des Rohmaterials gelöst wird und Kupfer als Kupfersulfid präzipitiert wird.

4. Verfahren nach einem der Ansprüche 1 - 3, **dadurch gekennzeichnet, dass** der pH-Wert in dem nicht-oxidativen Auslaug-Schritt innerhalb des Bereiches von 0,5 - 3,0 liegt.

5. Verfahren nach Anspruch 1 oder 2, **dadurch gekennzeichnet, dass** in den oxidativen Auslaugschritten des Rohmaterials, das Rohmaterial mit Hilfe von Kupfer-(II)-Chlorid zum Lösen von Sulfiden gelaugt wird, und dass das in dem ersten Auslaugschritt präzipitierte Kupfersulfid zum Lösen in Kupfer-(II)-Chlorid gebracht wird.

6. Verfahren nach einem der Ansprüche 1, 2 oder 5, **dadurch gekennzeichnet, dass** das in den oxidativen Auslaugschritten des Rohmaterials verwendete oxidative Reagenzmittel ein Sauerstoff enthaltendes Gas in Form von Sauerstoff, Sauerstoff angereicherte Luft oder Luft ist, und dass dem Auslaugverfahren Salzsäure zugeführt wird.

7. Verfahren nach einem der Ansprüche 1, 2 oder 5, **dadurch gekennzeichnet, dass** den oxidativen Auslaugschritten des Rohmaterials das eingesetzte oxidative Reagenz Chlor ist, das in der Chlor-Alkali-Elektrolyse gebildet wird.

8. Verfahren nach einem der Ansprüche 1, 2 oder 5 - 7, **dadurch gekennzeichnet, dass** in den oxidativen Auslaugschritten des Rohmaterials der pH-Wert innerhalb des Bereichs 1,7 - 2,8 eingestellt wird, vorzugsweise innerhalb des Bereiches 2,0 - 2,5.

9. Verfahren nach einem der Ansprüche 1 - 8, **dadurch gekennzeichnet, dass** das in dem Auslaugresiduum enthaltene Eisen hauptsächlich Hämatit ist.

10. Verfahren nach einem der Ansprüche 1 - 9, **dadurch gekennzeichnet, dass** zum Entfernen gelösten Sulfates und Eisen ein Kalziumbestandteil und Natriumhydroxid zu der nickelangereicherten Frischlauge geführt wird, und das erzeugte Eisen-/Gips-Präzipitat dem finalen Auslaugschritt zugeführt wird.

11. Verfahren nach einem der Ansprüche 1 - 10, **dadurch gekennzeichnet, dass** Nickelhydroxid als ein Kobalt enthaltendes Endprodukt präzipitiert wird.

12. Verfahren nach einem der Ansprüche 1 - 10, **dadurch gekennzeichnet, dass** die nickelangereicherte Frischlauge einer Kobaltabscheidung durch Extraktion unterzogen wird.

13. Verfahren nach Anspruch 12, **dadurch gekennzeichnet, dass** Nickel aus der kobaltfreien Frischlauge präzipitiert wird mit Hilfe von Natriumhydroxid als Nickelhydroxid, von dem metallisches Nickel durch Reduktion zurück gewonnen wird.

14. Verfahren nach Anspruch 1, **dadurch gekennzeichnet, dass** die Reduktion von metallischem Nickel mit Hilfe von Wasserstoff ausgeführt wird, der zumindest teilweise in der Chlor-Alkali-Elektrolyse gebildet wird.

15. Verfahren nach einem der Ansprüche 1 - 14, **dadurch gekennzeichnet, dass** das aus der NaCl-Lösung abgeschiedene Nickel einer Schleiffilterung zum Entfernen von Feststoff-Substanzen unterzogen wird, bevor die Lösung einer Mg-Präzipitation zugeführt wird.

16. Verfahren nach Anspruch 1, **dadurch gekennzeichnet, dass** die Magnesium-Präzipitation vorzugsweise bei einem pH-Wert von 9 - 10 ausgeführt wird.

17. Verfahren nach Anspruch 6, **dadurch gekennzeichnet, dass** die als ein Auslaug-Reagenz verwendete Salzsäure aus Wasserstoff und Chlor hergestellt wird, die in der Chor-Alkali-Elektrolyse gebildet werden.

18. Verfahren nach Anspruch 1, **dadurch gekennzeichnet, dass** das Nickel tragende Rohmaterial Gold und/oder andere Wertmetalle (PGM) enthält.

19. Verfahren nach Anspruch 18, **dadurch gekennzeichnet, dass** das Gold in dem finalen Auslaugschritt gelöst wird und aus der Lösung des finalen Auslaugschrittes zurück gewonnen wird; die Gold freie Lösung wird bei Betrachtung in der Verfahrensrichtung des Konzentrates dem vorangehenden Auslaugschritt zugeführt.

20. Verfahren nach Anspruch 19, **dadurch gekennzeichnet, dass** unter den Auslaugbedingungen schwer lösliche wertvolle Metalle (PGM) aus dem Extraktions-Rest zurück gewonnen werden.

21. Verfahren nach Anspruch 1, **dadurch gekennzeichnet, dass** die bei der Konzentration von Natriumchlorid geschaffene abgereicherte Lösung zumindest teilweise dem Rohmaterial-Auslaugprozess zugeführt wird.

## Revendications

1. Procédé de production d'un produit de nickel à partir de matières premières portant du nickel telles qu'un concentré, un minerai ou une chute de sulfure de nickel hydrométallurgiquement dans une lixiviation à base de chlorure, le procédé de production contenant les étapes suivantes :
a) la matière première est lixiviée en deux étapes ou plus par une solution contenant du chlorure de sodium et de chlorure de cuivre (II) comme une lixiviation à contre-courant dans des conditions atmosphériques, de telle sorte que la première étape de lixiviation vue dans le sens de progression de la matière première est non-oxydant, et les étapes suivantes sont oxydantes par rapport à la formation d'une solution de lixiviation enrichie (PLS) de chlorure de nickel enrichie en nickel et une résidu de lixiviation,
b) la solution de lixiviation enrichie en nickel est soumise à une précipitation de fer et de sulfates dissous, et le précipité est introduit dans l'étape finale du processus de lixiviation,
c) le nickel est précipité à partir de la solution de lixiviation enrichie, au moyen d'hydroxyde de sodium NaOH, comme l'hydroxyde de nickel Ni(OH)₂,
d) la solution de chlorure de sodium appauvrie en nickel est amenée à la précipitation de magnésium, où le magnésium est précipité à partir de la solution, au moyen d'hydroxyde de sodium, comme l'hydroxyde de magnésium Mg(OH)₂,
e) d'autres résidus d'impuretés divalents dissous sont retirés de la solution NaCl au moyen d'un échange d'ions,
f) la solution NaCl est soumise à concentration,
g) la solution purifiée et concentrée NaCl est amenée à l'électrolyse chlore-alcali, où une partie de la solution est transformée par électrolyse en chlore, hydrogène et hydroxyde de sodium qui sont utilisés comme réactifs dans le procédé,
h) la solution NaCl qui a été appauvrie dans l'électrolyse est entrée dans l'étape finale de lixiviation du concentré et/ou du minerai.

2. Procédé selon la revendication 1, **caractérisé par le fait que** la lixiviation du nickel contenant des matières premières s'effectue en deux étapes.

3. Procédé selon la revendication 1 ou 2, **caractérisé par le fait que**, dans la première étape de lixiviation, la matière première est lixiviée dans des conditions non-oxydantes au moyen de chlorure de cuivre (II), de telle sorte qu'une partie des sulfures de la matière première est dissoute, et le cuivre est précipité comme du sulfure de cuivre.

4. Procédé selon l'une quelconque des revendications 1 à 3, **caractérisé par le fait que** la valeur du pH dans l'étape de lixiviation non-oxydante se situe entre 0,5 et 3,0.

5. Procédé selon la revendication 1 ou 2, **caractérisé par le fait que**, dans les étapes de lixiviation oxydante, la matière première est lixiviée au moyen de chlorure de cuivre (II) pour dissoudre les sulfites, et que le sulfite de cuivre précipité dans la première étape de lixiviation est prévu pour être dissous dans le chlorure de cuivre (II).

6. Procédé selon l'une quelconque des revendications 1, 2 ou 5, **caractérisé par le fait que** le réactif oxydant utilisé dans les étapes de lixiviation oxydante de la matière première est un gaz portant de l'oxygène qui est de l'oxygène, de l'air enrichi en oxygène ou de l'air, et que l'acide chlorhydrique est amené au processus de lixiviation.

7. Procédé selon l'une quelconque des revendications 1, 2 ou 5, **caractérisé par le fait que**, dans les étapes de lixiviation oxydant de la matière première, le réactif oxydant employé est du chlore formé dans l'électrolyse chlore-alcali.

8. Procédé selon l'une quelconque des revendications 1, 2 ou 5 à 7, **caractérisé par le fait que** dans les étapes de lixiviation oxydante de la matière première, la valeur du pH est ajustée entre 1,7 et 2,8, et située préférentiellement entre 2,0 et 2,5.

9. Procédé selon l'une quelconque des revendications 1 à 8, **caractérisé par le fait que** le fer contenu dans le résidu de lixiviation est principalement de l'hématite.

10. Procédé selon l'une quelconque des revendications 1 à 9, **caractérisé par le fait que**, pour retirer les sulfites dissous et le fer, un composé de calcium et de l'hydroxyde de sodium sont introduits dans la solution de lixiviation enrichie en nickel, et le précipité fer/gypse créé est amené à l'étape finale de lixiviation.

11. Procédé selon l'une quelconque des revendications 1 à 10, **caractérisé par le fait que** l'hydroxyde de nickel est précipité comme un produit fini contenant le cobalt.

12. Procédé selon l'une quelconque des revendications 1 à 10, **caractérisé par le fait que** la solution de lixiviation enrichie en nickel est soumise au retrait de cobalt par extraction.

13. Procédé selon la revendication 12, **caractérisé par le fait que** le nickel est précipité à partir de la solution de lixiviation enrichie exempte de cobalt, au moyen d'hydroxyde de sodium, à partir duquel le nickel métallique est récupéré par réduction.

14. Procédé selon la revendication 1, **caractérisé par le fait que** la réduction de nickel métallique est exécutée au moyen d'hydrogène qui est au moins partiellement formé dans l'électrolyse chlore-alcali.

15. Procédé selon l'une quelconque des revendications 1 à 14, **caractérisé par le fait que** la solution NaCl appauvrie en nickel est soumise au filtrage de polissage pour retirer les substances solides avant d'amener la solution à la précipitation de Mg.

16. Procédé selon la revendication 1, **caractérisé par le fait que** la précipitation de magnésium est préférentiellement exécutée à une valeur de pH située entre 9 et 10.

17. Procédé selon la revendication 6, **caractérisé par le fait que** l'acide chlorhydrique utilisé comme un réactif de lixiviation est constitué d'hydrogène et de chlore formés dans l'électrolyse chlore-alcali.

18. Procédé selon la revendication 1, **caractérisé par le fait que** la matière première portant du nickel contient de l'or et/ou d'autres métaux précieux (PGM).

19. Procédé selon la revendication 18, **caractérisé par le fait que** l'or est dissous lors de l'étape finale de lixiviation et récupéré dans la solution ode l'étape finale de lixiviation ; la solution exemple d'or est amenée à l'étape précédente de lixiviation, vue dans le sens de progression du concentré.

20. Procédé selon la revendication 19, **caractérisé par le fait que**, dans les conditions de lixiviation, les métaux précieux faiblement solubles (PGM) sont récupérés dans le résidu de lixiviation.

21. Procédé selon la revendication 1, **caractérisé par le fait que** la solution appauvrie créée dans la concentration de chlorure de sodium est au moins partiellement amenée au processus de lixiviation des matières premières.
